# EUROPEAN PATENT APPLICATION

(11) **EP 4 832 166 A1**
(43) Date of publication of application: **28.10.2026**
(21) Application number: 24930345.4
(22) Date of filing: 20.08.2024
(51) Int. Cl.: H01M 10/613, H01M 10/6556, H01M 10/6567

(54) **CURRENT COLLECTOR, COOLING ASSEMBLY, BATTERY, AND ELECTRICAL DEVICE**

(30) Priority: 18.03.2024 CN 202420514401 U
(71) Applicant: Contemporary Amperex Technology Co., Limited, Ningde, Fujian 352100 (CN)
(72) Inventor: ZHOU, Cong, Ningde, Fujian 352100 (CN); HOU, Yuepan, Ningde, Fujian 352100 (CN)
(74) Representative: Straus, Alexander
(86) International application number: PCT/CN2024/113297
(87) International publication number: WO 2025/194683

(57) **Abstract**

Embodiments of the present disclosure provide a current collector, a cooling assembly, a battery, and an electric device. The current collector is used to connect to a harmonica-shaped tube, and comprises a cover body, supporting ribs, and a supporting elastic piece. The cover body is provided with a first flow channel having a first opening. Multiple supporting ribs are connected to the cover body at intervals, and are located in the first flow channel. A snap-fit groove is formed between the supporting ribs and the cover body, the snap-fit groove being used for containing the harmonica-shaped tube. The supporting clastic piece is connected to the supporting ribs, and at least a portion of the supporting elastic piece extends between two adjacent supporting ribs, the supporting elastic piece being used to support the harmonica-shaped tube.

## Description

### CROSS-REFERENCE TO RELATED APPLICATIONS

The present disclosure is based on and claims priority to the Chinese Patent Application No. 202420514401.8, filed on March 18, 2024 and entitled "CURRENT COLLECTOR, COOLING ASSEMBLY, BATTERY, AND ELECTRIC DEVICE", which is incorporated herein by reference in its entirety.

### TECHNICAL FIELD

The present disclosure relates to the technical field of manufacturing of batteries, and in particular, to a current collector, a cooling assembly, a battery, and an electric device.

### BACKGROUND

New energy batteries are increasingly widely used in life and industry. For example, new energy vehicles equipped with batteries have been widely used. In addition, batteries have also been increasingly used in the field of energy storage, etc.

In the related art, a cooling assembly is arranged in the battery for thermal management in order to keep the battery within a normal operating temperature range. The cooling assembly includes a current collector and a harmonica tube. During welding, the harmonica tube is prone to local deformation and collapse, which results in poor fitting between the outer wall of the harmonica tube and the inner wall of the current collector, leading to welding failure and liquid leakage of the cooling assembly.

### SUMMARY

In view of this, embodiments of the present disclosure aim to provide a current collector, a cooling assembly, a battery, and an ELECTRIC device, so that the possibility of liquid leakage of the cooling assembly can be reduced.

To achieve the above objectives, in a first aspect, the embodiments of the present disclosure provide a current collector, configured to be connected to a harmonica tube, including a cover body, supporting ribs, and an elastic supporting piece. The cover body forms a first flow channel with a first opening; the plurality of supporting ribs are connected at intervals to the cover body and located in the first flow channel, a snap-fit groove is formed between the supporting rib and the cover body, and the snap-fit groove is configured to accommodate the harmonica tube; and the elastic supporting piece is connected to the supporting rib, at least a portion of the elastic supporting piece protrudes between two adjacent supporting ribs, and the elastic supporting piece is configured to support the harmonica tube.

The harmonica tube is elastically supported by the supporting rib and the elastic supporting piece to make the harmonica tube and the current collector fit together, thereby reducing the possibility of liquid leakage of the cooling assembly.

In some embodiments, the elastic supporting piece includes a first elastic piece, and the first elastic piece includes a first extension portion, a first bent portion, and a first abutting portion. The first extension portion is connected to the supporting rib; the first bent portion is connected to the first extension portion and bent toward an inner wall of the cover body; and the first abutting portion is connected to the first bent portion and protrudes out of the supporting rib or is arranged flush with the supporting rib.

In this way, the first abutting portion can apply an acting force opposite to a deformation direction of a tube body to the tube body, thereby reducing the possibility of the harmonica tube deforming.

In some embodiments, the elastic supporting piece includes a second elastic piece, and the second elastic piece includes a second extension portion, a second bent portion, and a second abutting portion. The second extension portion is connected to the supporting rib; the second bent portion is connected to the second extension portion and bent away from the inner wall of the cover body; and the second abutting portion is connected to the second bent portion and extends away from the inner wall of the cover body.

The second extension portion, the second bent portion, and the second abutting portion can apply an acting force opposite to a deformation direction of the harmonica tube to the harmonica tube, so as to support the tube body and inclined ribs, thereby reducing the possibility of the harmonica tube deforming.

In some embodiments, the current collector also includes a compensation protrusion, and the compensation protrusion is connected to the cover body and located within the first flow channel.

In this way, the position where local poor fitting occurs between the harmonica tube and the current collector can be adjusted.

In some embodiments, the compensation protrusion is located between two adjacent supporting ribs.

Arranging the compensation protrusion between two adjacent supporting ribs can increase the compensation effect for the harmonica tube.

In some embodiments, the cover body, the supporting rib, and the elastic supporting piece are integrally molded by injection.

In this way, the structure of the current collector can be effectively simplified, thereby effectively simplifying the manufacturing process of the current collector.

In a second aspect, the embodiments of the present disclosure provide a cooling assembly including: a harmonica tube and any one of the above-mentioned current collectors. The harmonica tube includes a tube body and inclined ribs, the tube body forms a second flow channel, and the plurality of inclined ribs are arranged at intervals in the second flow channel. An end of the harmonica tube is located in the snap-fit groove and welded to the cover body, and the elastic supporting piece is located in the second flow channel and is connected to the harmonica tube after being at least partially melted.

In this way, the possibility of the harmonica tube deforming can be reduced, the adverse effects caused by liquid leakage of the cooling assembly can be weakened, and the thermal management effect for the cooling assembly can be improved.

In some embodiments, at least a portion of the elastic supporting piece is melted and then connected to a junction of the tube body and the inclined rib.

In this way, the supporting effect can be improved, and the possibility of a cooling liquid leaking can be reduced.

In some embodiments, the harmonica tube is molded by extrusion.

In this way, the production efficiency can be improved, with the length of the tube body set according to requirements.

In a third aspect, the embodiments of the present disclosure provide a battery, including a battery cell or a battery module and any one of the above-mentioned cooling assemblies, where the cooling assembly is thermally coupled to the battery cell or the battery module to dissipate heat from the battery cell or the battery module.

The battery provided in the embodiments of the present disclosure is capable of being subjected to effective thermal management to maintain the normal operating temperature range.

In a fourth aspect, the embodiments of present application provide an ELECTRIC device, including the above-mentioned battery, configured to provide electric energy.

### BRIEF DESCRIPTION OF DRAWINGS

FIG. 1 is a schematic structural view of a cooling assembly according to one or more embodiments;
FIG. 2 is a cross-sectional schematic structural view taken along A-A in FIG. 1;
FIG. 3 is an enlarged schematic structural view of part D in FIG. 2;
FIG. 4 is a schematic structural view of a current collector according to one or more embodiments;
FIG. 5 is an enlarged schematic structural view of part E in FIG. 4;
FIG. 6 is a front view of FIG. 4;
FIG. 7 is a cross-sectional schematic structural view taken along B-B in FIG. 6;
FIG. 8 is an enlarged schematic structural view of part F in FIG. 7; and
FIG. 9 is a cross-sectional schematic structural view taken along C-C in FIG. 6.

List of reference numerals:
Current collector 100; Snap-fit groove 100a;
Cover body 10; First flow channel 10a; First opening 10a1;
Supporting rib 20;
Elastic supporting piece 30; First elastic piece 31; First extension portion 311; First bent portion 312; First abutting portion 313; Second elastic piece 32; Second extension portion 321; Second bent portion 322; Second abutting portion 323;
Compensation protrusion 40;
Connector 50;
Cooling assembly 1000; Harmonica tube 200; Tube body 210; Inclined rib 220.

### DETAILED DESCRIPTION

Embodiments of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meaning as commonly understood by those skilled in the art belonging to the technical field of the present disclosure. The terms used herein are intended only for the purpose of describing a specific embodiment and are not intended to limit the present disclosure. The terms "includes, including, comprises, and comprising" and "has, have, and having" as well as any variations thereof of the present disclosure are intended to cover nonexclusive inclusion.

In the description of the embodiments of the present disclosure, the technical terms "first", "second", "third", and the like are used only to distinguish between different objects, and are not to be understood as indicating or implying a relative importance or implicitly specifying the number, particular sequence, or primary and secondary relation of the technical features indicated. In the description of the embodiments of the present disclosure, "a plurality of" means two or more, unless otherwise explicitly and specifically defined.

The reference to "embodiment" herein means that specific features, structures or characteristics described in connection with the embodiment may be contained in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, unless otherwise clearly specified and defined, technical terms "mounting", "connection", and the like should be broadly understood. For example, the connection may be fixed connection, detachable connection or integrated connection, may be mechanical connection or electrical connection, or may be direct connection, indirect connection through an intermediate medium, internal communication between two elements, or interaction relationship between two elements. For those of ordinary skills in the art, the specific meanings of the above terms in the embodiments of the present disclosure may be understood based on specific situations.

In the related art, in order to ensure the stable performance of electric devices such as new energy vehicles using batteries, it is necessary to perform thermal management on the battery to ensure that the battery operates within a suitable temperature range. The battery may be a battery pack. The battery pack includes a box and one or more battery cell assemblies. The battery cell assemblies are accommodated in the box. The battery may include one or more battery cell assemblies for supplying voltage and capacity. The battery cell assembly may include a plurality of battery cells, and is formed by arranging the plurality of battery cells, and the plurality of battery cells are connected in series or in parallel or in series-parallel through a busbar component. A cooling assembly is arranged inside the battery, and the cooling assembly can accommodate a cooling liquid to regulate the battery temperature. The cooling assembly exchanges heat with the battery cell, thereby enabling effective thermal management for the battery.

The cooling assembly includes a current collector and a heat exchange tube, and a harmonica tube is one type of heat exchange tube. The harmonica tube is provided with a plurality of heat exchange channels, and the current collector is mounted at an end of the harmonica tube and closes the plurality of heat exchange channels. When cooling the battery, the cooling assembly can accommodate the cooling liquid to regulate the battery temperature. The cooling liquid enters the heat exchange channel of the harmonica tube through the current collector to exchange heat with the battery, thereby reducing the risk of thermal runaway of the battery.

During the welding of the current collector and the harmonica tube, the harmonica tube is prone to deformation, which leads to welding failure of the current collector and the harmonica tube, and consequently the cooling liquid is prone to leakage.

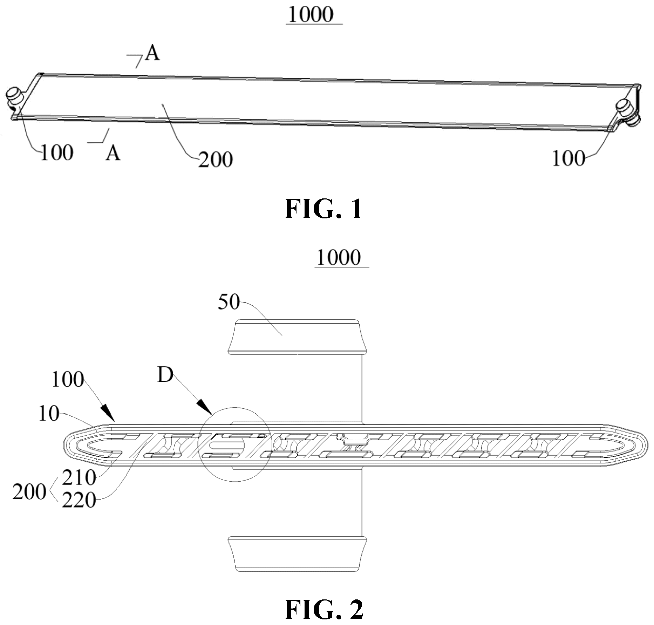

Based on the above, embodiments of the present disclosure provide a cooling assembly 1000. Please refer to FIG. 1 to FIG. 3, the cooling assembly 1000 includes a harmonica tube 200 and current collectors 100. The harmonica tube 200 includes a tube body 210 and inclined ribs 220. The tube body 210 forms a second flow channel, and the plurality of inclined ribs 220 are arranged at intervals in the second flow channel to form a plurality of heat exchange channels extending in a longitudinal direction of the harmonica tube 200. Two ends of the harmonica tube 200 in the longitudinal direction can each be connected to one current collector 100.

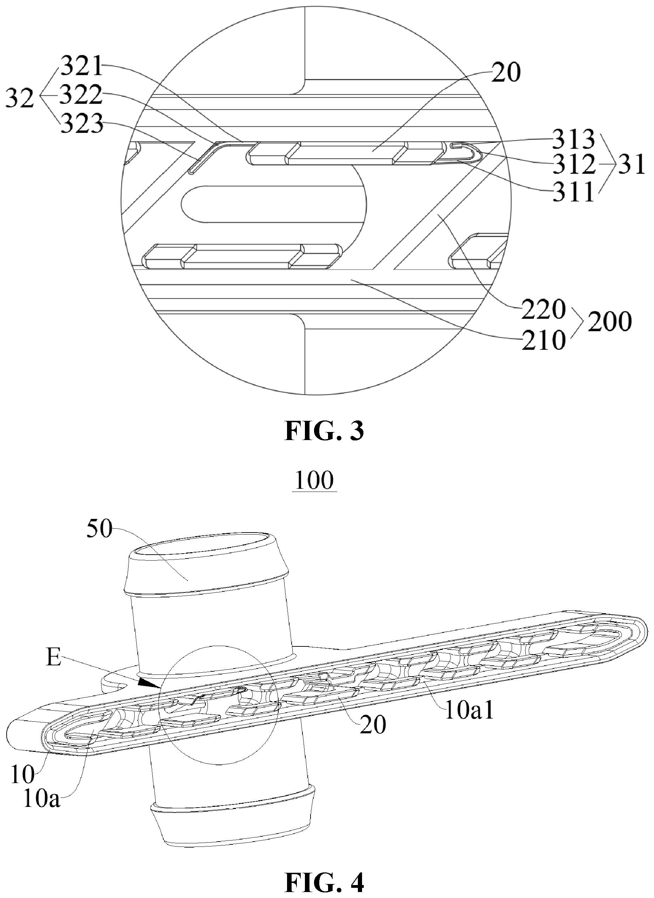

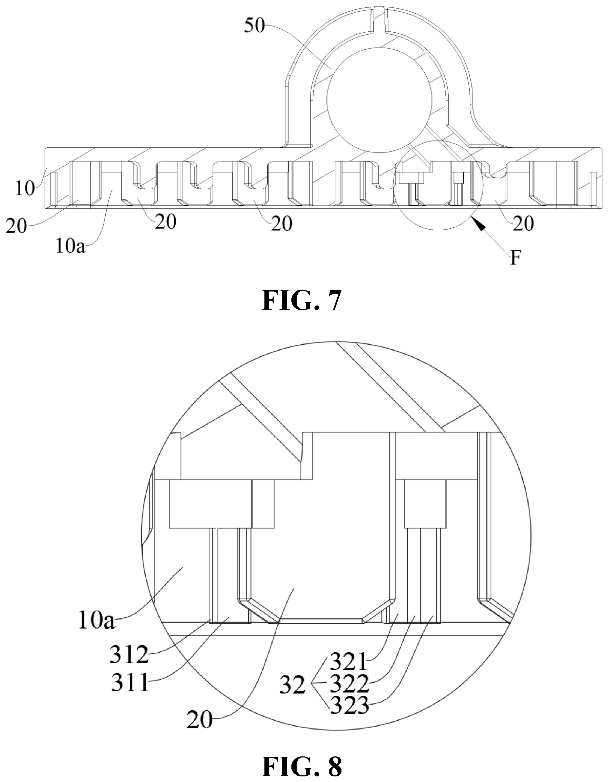

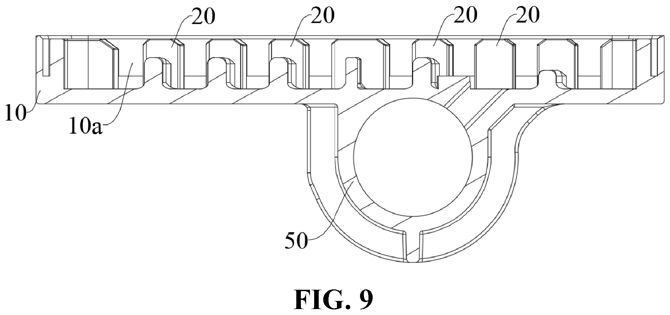

The embodiments of the present disclosure further provide a current collector 100, configured to be connected to the harmonica tube 200. Please refer to FIG. 4 to FIG. 9, the current collector 100 includes a cover body 10, supporting ribs 20, and elastic supporting pieces 30. The cover body 10 forms a first flow channel 10a with a first opening 10a1; the plurality of supporting ribs 20 are connected at intervals to the cover body 10 and located in the first flow channel 10a, and a snap-fit groove 100a is formed between the supporting rib 20 and the cover body 10, and the snap-fit groove 100a is configured to accommodate the harmonica tube 200; and the elastic supporting piece 30 is connected to the supporting rib 20, and at least a portion of the elastic supporting piece 30 protrudes between two adjacent supporting ribs 20. The cover body 10 is provided with the first flow channel 10a, the first flow channel 10a is connected to the harmonica tube 200 through the first opening 10a1, that is, after one end of the harmonica tube 200 is inserted into the first opening 10a1 of the cover body 10, it is located in the snap-fit groove 100a. The shape of the first opening 10a1 can be adapted to the outer contour shape of the end of the harmonica tube 200. For example, when the harmonica tube 200 is a flat tube, the first opening 10a1 can be an elliptical opening.

The supporting rib 20 is located in the first flow channel 10a. The plurality of supporting ribs 20 are arranged at intervals to avoid the inclined rib 220 of the harmonica tube 200, so that the harmonica tube 200 can be inserted into the current collector 100, and at the same time, the structural strength of the cover body 10 can be strengthened. The snap-fit groove 100a is formed between the supporting rib 20 and the cover body 10, and an end of the harmonica tube 200 is located in the snap-fit groove 100a and welded to the cover body 10. For example, the plurality of supporting ribs 20 are arranged at intervals along an inner wall contour of the cover body 10, so that the snap-fit groove 100a formed between the plurality of supporting ribs 20 and the cover body 10 is annular. When the harmonica tube 200 is a flat tube, the shape of the snap-fit groove 100a can be an elliptical ring. The supporting rib 20 abuts against the tube body 210 of the harmonica tube 200, which can reduce the deformation of the harmonica tube 200. After the harmonica tube 200 is welded to the current collector 100, a portion of the supporting rib 20 can be melted and then connected to the tube body 210.

The elastic supporting piece 30 is located in the second flow channel, abuts against the tube body 210 and/or the inclined rib 220 of the harmonica tube 200, and is connected to the harmonica tube 200 after being at least partially melted, for example, connected to the tube body 210 and/or the inclined rib 220. The elastic supporting piece 30 is configured to support the harmonica tube 200, thereby further reducing the adverse effects caused by deformation of the harmonica tube 200 during welding, extrusion and other processes, and improving the fit between the harmonica tube 200 and the current collector 100. For example, if the harmonica tube 200 is deformed during extrusion molding, or if the harmonica tube 200 is prone to deformation and collapse due to heat as the welding temperature rises when the harmonica tube 200 is connected to the current collector 100 by welding, the elastic supporting piece 30 can apply an acting force opposite to a deformation direction of the harmonica tube 200 to the harmonica tube 200, thereby supporting the harmonica tube 200 and reducing the possibility of the harmonica tube 200 deforming.

It should be noted that the accompanying drawings in the specification only schematically show two elastic supporting pieces 30 on one of the supporting ribs 20; and the elastic supporting pieces 30 can be connected to all other supporting ribs 20. The elastic supporting piece 30 is connected to the supporting rib 20 to form a cantilever structure. A free end of the elastic supporting piece 30 can be warped, for example, formed into a "U", "C", "L" or "J" shape, to apply the acting force to the harmonica tube 200.

By using the supporting rib 20 and the elastic supporting piece 30, the impact of local deformation of the harmonica tube 200 during welding can be reduced, and the harmonica tube 200 can be elastically supported so that the harmonica tube 200 and the current collector 100 can fit together, thereby reducing the possibility of liquid leakage of the cooling assembly 1000.

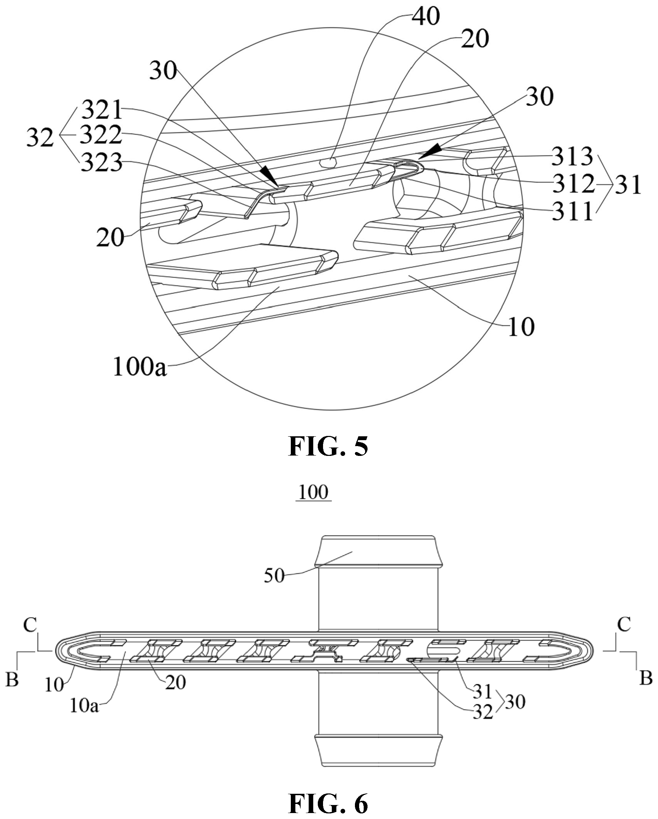

In some embodiments, please refer to FIG. 3 and FIG. 5, the elastic supporting piece 30 includes a first elastic piece 31, and the first elastic piece 31 includes a first extension portion 311, a first bent portion 312, and a first abutting portion 313. The first extension portion 311 is connected to the supporting rib 20; the first bent portion 312 is connected to the first extension portion 311 and bent toward an inner wall of the cover body 10; and the first abutting portion 313 is connected to the first bent portion 312 and protrudes out of the supporting rib 20 or is arranged flush with the supporting rib 20.

Thus, the first elastic piece 31 can be fixed to the supporting rib 20 through the first extension portion 311, and the first abutting portion 313 is warped toward the tube body 210. When the harmonica tube 200 is heated and has a tendency to deform, a pressure toward the second flow channel is applied to the first abutting portion 313. The first abutting portion 313 can apply an acting force opposite to a deformation direction of the tube body 210 to the tube body 210, so as to reduce the possibility of the harmonica tube 200 deforming.

Exemplarily, the first bent portion 312 may abut against the inclined rib 220 to support the inclined rib 220, thereby reducing the possibility of the harmonica tube 200 deforming.

In some embodiments, please refer to FIG. 3 and FIG. 5, the elastic supporting piece 30 includes a second elastic piece 32, and the second elastic piece 32 includes a second extension portion 321, a second bent portion 322, and a second abutting portion 323. The second extension portion 321 is connected to the supporting rib 20; the second bent portion 322 is connected to the second extension portion 321 and bent away from the inner wall of the cover body 10; and the second abutting portion 323 is connected to the second bent portion 322 and extends away from the inner wall of the cover body 10.

The second elastic piece 32 can be fixed to the supporting rib 20 through the second extension portion 321. The second abutting portion 323 extends or is warped in a direction of the inclined rib 220. When the harmonica tube 200 is heated and has a tendency to deform, the deformation tendency of the harmonica tube 200 exerts a pressure on the second elastic piece 32. For example, the tube body 210 exerts a pressure toward the second flow channel on the second extension portion 321, and the inclined rib 220 exerts a pressure toward the second flow channel on the second abutting portion 323. The second extension portion 321, the second bent portion 322, and the second abutting portion 323 can apply the acting force opposite to the deformation direction of the harmonica tube 200 to the harmonica tube 200, supporting the tube body 210 and the inclined rib 220, so as to reduce the possibility of the harmonica tube 200 deforming and improve the supporting capacity of the inclined rib 220 for the tube body 210.

It can be understood that the current collector provided in the embodiments of the present disclosure can be provided with either the first elastic piece 31 or the second elastic piece 32, or both the first elastic piece 31 and the second elastic piece 32 simultaneously.

Meanwhile, the position and number of the first elastic piece 31 and the second elastic piece 32 are not limited, and both may be selectively arranged according to the specific situation of the harmonica tube 200. For example, the number can be increased at positions that are prone to deformation.

In some embodiments, please refer to FIG. 4 and FIG. 5, the current collector 100 further includes a compensation protrusion 40, and the compensation protrusion 40 is connected to the cover body 10 and located in the first flow channel 10a.

The compensation protrusion 40 is configured to adjust the position of poor local fitting between the harmonica tube 200 and the current collector 100, so as to compensate for the deformation of the harmonica tube 200. For example, the current collector 100 and the harmonica tube 200 are connected by welding. After the welding temperature rises, the harmonica tube 200 collapses locally. After being melted due to heat, the compensation protrusion 40 is welded to the harmonica tube 200, which can compensate for the deformation of the harmonica tube 200.

It should be noted that the compensation protrusion 40 is only schematically shown at one position in the attached drawings of the specification. The harmonica tube 200 is more prone to deformation near the middle. Depending on the actual situation, the number and size of the compensation protrusion 40 can be increased near the middle of the harmonica tube 200.

In some embodiments, please refer to FIG. 4 and FIG. 5, the compensation protrusion 40 is located between two adjacent supporting ribs 20.

The supporting effect on the harmonica tube 200 between two adjacent supporting ribs 20 is weaker than that at other positions. The compensation protrusion 40 is arranged between two adjacent supporting ribs 20 to increase the compensation effect for the harmonica tube 200.

In some embodiments, the cover body 10, the supporting rib 20, and the elastic supporting piece 30 are integrally molded by injection.

The cover body 10, the supporting rib 20, and the elastic supporting piece 30 are integrally molded by injection, which can effectively simplify the structure of the current collector 100, thereby effectively simplifying the manufacturing process of the current collector 100 and improving the overall structural stability of the current collector 100.

In some embodiments, please refer to FIG. 4, the current collector 100 further includes a connector 50, connected to the cover body 10 and communicating with the first flow channel 10a. The connector 50 is configured to guide the cooling liquid into the first flow channel 10a, or to guide the cooling liquid out of the first flow channel 10a.

In some embodiments, please refer to FIG. 1 to FIG. 3, the cooling assembly 1000 includes a harmonica tube 200 and any one of the above-mentioned current collectors 100. The harmonica tube 200 includes a tube body 210 and inclined ribs 220, the tube body 210 forms a second flow channel, and the plurality of inclined ribs 220 are arranged at intervals in the second flow channel. An end of the harmonica tube 200 is located in the snap-fit groove 100a and welded to the cover body 10, and the elastic supporting piece 30 is located in the second flow channel and is connected to the harmonica tube 200 after being at least partially melted.

Exemplarily, the material of the elastic supporting piece 30 is the same as that of the cover body 10, for example, both the elastic supporting piece 30 and the cover body 10 are made of plastic.

The harmonica tube 200 includes the tube body 210 and the plurality of inclined ribs 220. The plurality of inclined ribs 220 can divide the second flow channel inside the tube body 210 to form a plurality of heat exchange channels extending in a longitudinal direction of the harmonica tube 200.

The shape of the inclined rib 220 is not limited; for example, the inclined rib 220 can be plate-shaped, mesh-shaped, or in other shapes.

It can be understood that the outer wall of the harmonica tube 200 is adapted to the inner wall of the current collector 100, that is, the cross-section of the first opening 10a1 is adapted to the outer contour of the harmonica tube 200, so that when the harmonica tube 200 is inserted into the current collector 100, the first opening provides a stable supporting and limitation effect for the harmonica tube 200. The possibility of the cooling liquid leaking can also be reduced.

Exemplarily, the elastic supporting piece 30 is in interference fit with the harmonica tube 200 to improve the stability of the elastic supporting piece 30.

In some embodiments, please refer to FIG. 2 and FIG. 3, the elastic supporting piece 30 is connected at a junction of the tube body 210 and the inclined rib 220. The junction of the tube body 210 and the inclined rib 220 is more prone to deformation than other positions. Arranging the elastic supporting piece 30 at the junction of the tube body 210 and the inclined rib 220 can improve the supporting effect and reduce the possibility of the cooling liquid leaking.

In some embodiments, the harmonica tube 200 is made of plastic, and the harmonica tube 200 is molded by extrusion. The production efficiency can be improved, with the length of the tube body 210 set according to requirements.

In some embodiments, the cooling assembly 1000 includes a current collector 100 and a harmonica tube 200. The current collector 100 includes a cover body 10, supporting ribs 20, and elastic supporting pieces 30. The cover body 10 forms a first flow channel 10a with a first opening 10a1; the plurality of supporting ribs 20 are connected at intervals to the cover body 10 and located in the first flow channel 10a, and a snap-fit groove 100a is formed between the supporting rib 20 and the cover body 10; and the elastic supporting piece 30 is connected to the supporting rib 20, and at least a portion of the elastic supporting piece 30 protrudes between two adjacent supporting ribs 20. The harmonica tube 200 includes a tube body 210 and inclined ribs 220, the tube body 210 forms a second flow channel, and the plurality of inclined ribs 220 are arranged at intervals in the second flow channel to form a plurality of heat exchange channels. An end of the harmonica tube 200 is located in the snap-fit groove 100a and welded to the cover body 10, and the elastic supporting piece 30 is located in the second flow channel and is connected to the harmonica tube 200 after being at least partially melted. The elastic supporting piece 30 is connected to a junction of the tube body 210 and the inclined rib 220. The cover body 10, the supporting rib 20, and the elastic supporting piece 30 are integrally molded by injection, while the harmonica tube 200 is molded by plastic extrusion. The elastic supporting piece 30 includes a first elastic piece 31 and a second elastic piece 32. The first elastic piece 31 includes a first extension portion 311, a first bent portion 312, and a first abutting portion 313. The first extension portion 311 is connected to the supporting rib 20; the first bent portion 312 is connected to the first extension portion 311 and bent toward an inner wall of the cover body 10; and the first abutting portion 313 is connected to the first bent portion 312 and protrudes out of the supporting rib 20 or is arranged flush with the supporting rib 20. The second elastic piece 32 includes a second extension portion 321, a second bent portion 322, and a second abutment 323. The second extension portion 321 is connected to the supporting rib 20; the second bent portion 322 is connected to the second extension portion 321 and bent away from the inner wall of the cover body 10; and the second abutting portion 323 is connected to the second bent portion 322 and extends away from the inner wall of the cover body 10. The current collector 100 further includes a compensation protrusion 40, and the compensation protrusion 40 is connected to the cover body 10 and located in the first flow channel 10a. The compensating extension 40 is located between two adjacent supporting ribs 20. The current collector 100 also includes a connector 50, connected to the cover body 10 and communicating with the first flow channel 10a. The connector 50 is configured to guide the cooling liquid into the first flow channel 10a, or to guide the cooling liquid out of the first flow channel 10a.

The embodiments of the present disclosure further provide a battery, including a battery cell or a battery module and any one of the above cooling assemblies 1000, where the cooling assembly 1000 is thermally coupled to the battery cell or the battery module to dissipate heat from the battery cell or the battery module.

The battery provided in the embodiments of the present disclosure is capable of being subjected to effective thermal management to maintain the normal operating temperature range.

The embodiments of the present disclosure further provide an electric device, including the above-mentioned battery, configured to supply electric energy.

The electrical apparatus may be, but is not limited to, a mobile phone, a tablet, a laptop, an electric toy, an electric tool, a battery vehicle, an electric vehicle, a ship, a spacecraft, and so on. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

The above embodiments are merely used to illustrate the technical solutions of the present disclosure, instead of imposing any limitation on the present disclosure; while the present disclosure is described in detail with reference to the above embodiments, those with ordinary skills in the art should understand that: they can still make modifications on the technical solutions disclosed in the above embodiments, or perform equivalent replacements on a part or all of technical features thereof; and these modifications or replacements are not intended to depart the essence of corresponding technical solutions from the scope of the technical solutions of the embodiments of the present disclosure, but should all be encompassed within the scope of the present disclosure. In particular, the technical features mentioned in the various embodiments may be combined in any manner as long as there is no structural conflict. The present disclosure is not limited to the specific embodiments disclosed herein.

## Claims

1. A current collector, configured to be connected to a harmonica tube, comprising:
a cover body, forming a first flow channel with a first opening;
a plurality of supporting ribs, connected at intervals to the cover body, and located in the first flow channel, wherein a snap-fit groove is formed between the supporting rib and the cover body, and the snap-fit groove is configured to accommodate the harmonica tube; and
an elastic supporting piece, connected to the supporting rib, wherein at least a portion of the elastic supporting piece protrudes between two adjacent supporting ribs, and the elastic supporting piece is configured to support the harmonica tube.

2. The current collector according to claim 1, wherein the elastic supporting piece comprises a first elastic piece, and the first elastic piece comprises:
a first extension portion, connected to the supporting rib;
a first bent portion, connected to the first extension portion and bent toward an inner wall of the cover body; and
a first abutting portion, connected to the first bent portion and protruding out of the supporting rib or being arranged flush with the supporting rib.

3. The current collector according to claim 1 or 2, wherein the elastic supporting piece comprises a second elastic piece, and the second elastic piece comprises:
a second extension portion, connected to the supporting rib;
a second bent portion, connected to the second extension portion and bent away from the inner wall of the cover body; and
a second abutting portion, connected to the second bent portion and extending away from the inner wall of the cover body.

4. The current collector according to any one of claims 1 to 3, wherein the current collector further comprises:
a compensation protrusion, connected to the cover body and located in the first flow channel.

5. The current collector according to claim 4, wherein the compensation protrusion is located between two adjacent supporting ribs.

6. The current collector according to any one of claims 1 to 5, wherein the cover body, the supporting rib, and the elastic supporting piece are integrally molded by injection.

7. A cooling assembly, comprising:
the current collector according to any one of claims 1 to 6; and
a harmonica tube, comprising a tube body and inclined ribs, the tube body forming a second flow channel, and the plurality of inclined ribs being arranged at intervals in the second flow channel;
wherein an end of the harmonica tube is located in the snap-fit groove and welded to the cover body, and the elastic supporting piece is located in the second flow channel and is connected to the harmonica tube after being at least partially melted.

8. The cooling assembly according to claim 7, wherein at least a portion of the elastic supporting piece is melted and then connected to a junction of the tube body and the inclined rib.

9. The cooling assembly according to claim 7 to 8, wherein the harmonica tube is molded by extrusion.

10. A battery, comprising:
a battery cell or a battery module; and
the cooling assembly according to any one of claims 7 to 9, thermally coupled to the battery cell or the battery module to dissipate heat from the battery cell or the battery module.

11. An electric device, comprising the battery according to claim 10, configured to provide electric energy.
